# EUROPÄISCHE PATENTSCHRIFT

(11) **EP 2 726 321 B1**
(45) Veröffentlichungstag und Bekanntmachung des Hinweises auf die Patenterteilung: **03.04.2019**
(21) Anmeldenummer: 12751282.0
(22) Anmeldetag: 06.08.2012
(51) Int. Cl.: B60M 1/18, B60L 3/06, B60L 7/06, B60L 9/16

(54) **SYSTEM ZUM BETRIEB EINES ELEKTRISCHEN TRIEBFAHRZEUGS**
SYSTEM FOR OPERATING AN ELECTRIC TRACTIVE UNIT
SYSTÈME POUR FAIRE FONCTIONNER UNE MOTRICE ÉLECTRIQUE

(30) Priorität: 12.08.2011 DE 102011080887
(43) Veröffentlichungstag der Anmeldung: 07.05.2014
(73) Patentinhaber: Siemens Mobility GmbH, 81739 München (DE)
(72) Erfinder: DÖLLING, Andre, 91056 Erlangen (DE)
(86) Internationale Anmeldenummer: PCT/EP2012/065322
(87) Internationale Veröffentlichungsnummer: WO 2013/023946

(56) Entgegenhaltungen:
- CN-A- 102 039 828
- CN-B- 101 434 206
- CN-Y- 2 787 499
- DE-A1- 10 319 126
- JP-A- 2002 058 110

## Beschreibung

Die Erfindung betrifft ein System zum Betrieb eines elektrischen Triebfahrzeugs nach dem Oberbegriff des Patentanspruches 1.

Die Energieversorgung elektrischer Triebfahrzeuge, insbesondere von Schienen- und Straßenfahrzeugen, erfolgt über Fahrleitungsanlagen. Dabei wandeln Unterwerke eine Versorgungsspannung eines Energieversorgungsnetzes in eine Fahrleitungsspannung um und speisen diese in die Fahrleitung, beispielsweise in den Fahrdraht einer Oberleitungsanlage oder in eine seitlich der Fahrstrecke angeordnete Stromschiene, ein. Aus betrieblichen oder technischen Gründen ist eine Fahrleitung durch Trennstellen in Fahrleitungsabschnitte unterteilt, die elektrisch voneinander getrennt versorgte Speiseabschnitte bilden.

Trennstellen werden durch so genannte Streckentrenner realisiert, die von einem Stromabnehmer eines Triebfahrzeuges in Schleifkontakt überfahrbar sind und die den Längsstromfluss an der Trennstelle unterbrechen. Es stellt sich dadurch eine zweiseitige Speisung ein, die energetische und betriebliche Vorteile aufweist.

**Gemäß Seiten 118 bis 121 aus "**Fahrleitungen elektrischer Bahnen: Planung, Berechnung, Ausführung", 2. überarbeitete Auflage, Stuttgart; Leipzig: Teubner, 1998, ISBN 3-519-16177-X**, sind durch Streckentrenner gebildete elektrische Trennungen zu unterscheiden von so genannten Schutzstrecken. Schutzstrecken trennen die Abschnitte einer Oberleitung in der Weise, dass bei Befahren mit dem elektrischen Triebfahrzeug der oder die Stromabnehmer die Abschnitte nicht überbrücken. Innerhalb eines Bahnenergieversorgungssystems bestehen Schutzstrecken bei Geschwindigkeiten größer als 160 km/h aus aneinander gefügten Streckentrennungen mit einem dazwischen liegenden neutralen Oberleitungsabschnitt. Dabei kann der neutrale Abschnitt entweder kürzer als der Abstand von zwei Stromabnehmern auf Triebzügen oder länger gestaltet werden als der größte Abstand zwischen den äußersten Stromabnehmern eines Triebzuges.**

**Aus der Übersetzung der europäischen Patentschrift** DE 60 2005 002 864 T2 **ist ein Verfahren zur Steuerung des Betriebs eines Zuges in einem neutralen Abschnitt, wo keine Elektrizität für den Antrieb der Lokomotive verfügbar ist, bekannt. Zum Passieren eines Neutralabschnittes werden die Fahrmotoren einer Lokomotive abgestellt, ein Haupt-Stromkreisunterbrecher der Lokomotive geöffnet und in einigen Fällen der Stromabnehmer vor dem Erreichen des Neutralabschnittes abgesenkt. Damit ein derartiger Neutralabschnittsarbeitsgang zur elektrischen Trennung einer Führungslokomotive von der Oberleitung auch bei Folgelokomotiven desselben Zuges durchgeführt werden kann, ist im Gleisbett in einer Entfernung vor dem Neutralabschnitt ein Transponder positioniert, der durch Transponder-Lesegeräte in den Lokomotiven erfassbar ist.**

**Im Gegensatz zu Neutralabschnitten, die Triebfahrzeuge elektrisch getrennt von der Oberleitung befahren,** unterliegen Streckentrenner erheblichen Verschleißerscheinungen, die insbesondere von Abrisslichtbögen und Ausgleichströmen bei Fahrzeugüberfahrten herrühren. Diese Beanspruchungen von Streckentrennern, insbesondere in Nahverkehrsanlagen, werden durch den Einsatz moderner Fahrzeuge in Drehstromantriebstechnik verstärkt, da diese einen größeren Leistungsbedarf aufgrund höherer Beschleunigung, Geschwindigkeit und Komfortleistungen, wie zum Beispiel Klimatisierung, haben.

Bei Abriss des Stromflusses durch Kontaktunterbrechungen zwischen Stromabnehmer und Streckentrenner können sich Lichtbögen ausbilden, die Lichtbogenableitvorrichtungen, wie zum Beispiel Lichtbogenhörner, optional vorhandene Schleifkufen und die Isolation verschleißen. Dadurch reduzieren sich die Lebensdauer und der Zyklus von Reinigungs- und Instandhaltungsarbeiten, etwa einem Wechsel von Lichtbogenhörnern. Zusätzlich entstehen bei Lichtbogenbildung Funk- und Telekommunikationsstörungen sowie Geräusche, die Maschinen beziehungsweise Menschen stören.

Die Veröffentlichung EP 0 592 819 A1 offenbart einen Streckentrenner für Fahrleitungen elektrischer Fahrzeuge, insbesondere Bahnen. Dieser umfasst zwei Anschlussvorrichtungen, die jeweils ein Fahrleitungsdrahtende mit einem Lichtbogenhorn verbinden. Die Anschlussvorrichtungen sind über Isolierkufen miteinander verbunden, wobei sich die Lichtbogenhörner an einer Trennstelle isolierend gegenüber stehen. An der Trennstelle ist wenigstens eine diese überbrückende Leitkufe angeordnet, die mit einem der Lichtbogenhörner leitend verbunden ist. Damit kann der Traktions- oder Bremsstrom über Kontaktstellen zwischen Fahrdraht und Schleifleiste und zwischen Schleifleiste und Schleifkufe kommutieren und reißt nicht unter Bildung eines Lichtbogens ab. Aufgrund der wirkenden Induktivitäten können aber auch bei diesem Streckentrenner Lichtbogenbildungen nicht sicher verhindert werden.

Ausgleichströme treten bei Potentialunterschieden zwischen Fahrleitungsabschnitten auf, wenn diese durch einen Stromabnehmer temporär kurzgeschlossen werden. Große Ausgleichsströme stellen sich insbesondere dann ein, wenn die Auslastung der benachbarten Speiseabschnitte unterschiedlich hoch ist.

Durch Streckentrenner fließende Ausgleichströme können durch elektrische Längskupplung der an einer Trennstelle endenden Fahrleitungsabschnitte vermieden werden. Dabei fließt der Längsstrom über einen parallel zum Streckentrenner angeordneten Trennschalter, der zur Verbindung bzw. Trennung benachbartere Speiseabschnitte beispielsweise durch einen Schalterfernantrieb gestellt werden kann. Aufgrund von Schutz- und Betreiberkonzepten ist es aber insbesondere in Nahverkehrsanlagen oftmals üblich oder sogar unmöglich, Speiseabschnitte nicht längs zu kuppeln. Bei vorhandener Längskupplung muss aber der Traktionsstrom in jedem Fall über die Trennstelle des Streckentrenners kommutieren und verursacht dabei Abrissfunken.

Aus der Offenlegungsschrift DE 103 19 126 A1 ist ein Streckentrenner für eine ankommende Fahrleitung und für eine abgehende Fahrleitung eines Oberleitungskettenwerkes bekannt. Es ist vorgesehen, dass die ankommende und die abgehende Fahrleitung über einen Schalter verbunden sind. Der Schalter ist mit einer Steuereinheit verbunden zum Schließen des Schalters bei herannahendem Fahrzeug und zum Öffnen des Schalters bei sich entfernendem Fahrzeug. Dazu ist die Steuereinheit eingangsseitig beispielsweise mit einem Positionsmelder verbunden, der die Position des Fahrzeugs erkennt. Im kurzgeschlossenen Zustand fließen Ausgleichsströme zwischen den Unterwerken nicht mehr über die Schleifleisten mit möglicher Bildung von Abrisslichtbögen, sondern direkt über den Schalter. Durch die elektrischen Schleifkufen wird zwar versucht, dass der Traktions- und Bremsstrom nicht unterbrochen und damit die Lichtbogenbildung vermieden wird, in der Praxis gelingt dies jedoch nur bedingt, da der Traktionsstrom dennoch über die Trennstelle kommutieren muss.

Die Umsetzung eines derartigen Schalters ist jedoch schwierig und erfordert eine Konstruktion, die einer Schaltanlage in Unterwerken ähnelt. Des Weiteren sind ein derartiger Schalter und benötigte Zusatzelemente in der Oberleitung anzuordnen, die deren Gewichtsbelag erhöhen. Gerade bei einfachen Fahrleitungen im Nahverkehr kann sich die Befahrung bei gleicher Geschwindigkeit verschlechtern, wenn der Einbauraum für die Anordnung der Zusatzelemente überhaupt verfügbar ist.

Es ist auch bekannt, dass ein Auftreten von Lichtbögen dadurch verhindert werden kann, indem Streckentrenner in Bremsbereichen einer Fahrstrecke angeordnet werden, da der Stromfluss zwischen Fahrleitung und Stromabnehmer praktisch verschwindet. Dies trifft allerdings nur für nicht rückspeisefähige Triebfahrzeuge zu, die bei der Bremsung keinen oder nur geringe Ströme aus der Fahrleitung aufnehmen. Rückspeisende Fahrzeuge speisen Energie in die Fahrleitung ein, wobei die bei der Rückspeisung abgegebene Leistung größer ist als die dabei aufgenommene Leistung. Bei Rückspeisung heben die Fahrzeuge die Spannung an, um Energie in die Fahrleitungsanlage übertragen zu können. Damit erhöht sich die Spannungsdifferenz an der Trennstelle im Betriebszustand, was eine Vergrößerung der störenden Ausgleichsströme zur Folge hat.

Zu Verschleiß führen auch Überfahrten eines Streckentrenners durch Triebfahrzeuge in Doppeltraktion. Der Streckentrenner gerät bei Überfahrung durch das führende Triebfahrzeug in Schwingungen, wodurch der Stromabnehmer des nachlaufenden Triebfahrzeugs schlechtere Kontaktbedingungen vorfindet. Bei Anordnung eines Streckentrenners in einem Beschleunigungsbereich der Fahrstrecke, etwa im Nahbereich einer Haltestelle, ist zudem die Überfahrtgeschwindigkeit des nachlaufenden Treibfahrzeugs und dadurch dessen Stromaufnahme größer als die des führenden Triebfahrzeugs.

Der Erfindung liegt daher die Aufgabe zugrunde, ein System zum Betrieb eines elektrischen Triebfahrzeugs der eingangs genannten Art bereitzustellen, mit dem der Verschleiß an Streckentrennern reduziert werden kann.

Die Aufgabe wird gelöst durch ein gattungsgemäßes Betriebssystem mit den im kennzeichnenden Teil des Patentanspruches 1 angegebenen Merkmalen. Demnach umfasst das Betriebssystem eine Einrichtung zur Erkennung einer dem Triebfahrzeug bevorstehenden Überfahrt des Streckentrenners, die derart mit einer Antriebssteuerung für einen elektrischen Antrieb des Triebfahrzeugs zusammenwirkt, dass eine Energieübertragung über den Stromabnehmer während der Überfahrt des Streckentrenners automatisch vermindert oder abgeschaltet ist. Mittels der Erkennungseinrichtung werden aus Sicht des Triebfahrzeugs Streckentrenner vor Überfahrt detektiert und der Antriebssteuerung mitgeteilt, welche dann automatisch sichergestellt, dass bei Überfahrt der Trennstelle nur ein reduzierter oder gar kein Strom zwischen Stromabnehmer und Streckentrenner fließt. Damit können die Verschleiß verursachenden Phänomene wie Abrisslichtbögen oder Ausgleichströme weitestgehend vermieden werden. Die Erfindung begegnet den Verschleißproblemen nicht durch Verbesserungen am Streckentrener, an dem die Verschleißsymptome auftreten, sondern sie erkennt als Ursprung des Problems die Streckentrennerüberfahrt bei fortgesetzter Energieübertragung über den Stromabnehmer des Triebfahrzeugs. Der Verschleiß wird durch die Vermeidung der Entstehung von Lichtbögen infolge der Unterbrechung von Traktions- oder Bremsströmen deutlich reduziert. Die Erkennung der Streckentrennerposition relativ zur Fahrzeugposition kann beispielsweise fahrzeugseitig über ein Satelliten gestütztes Positionserkennungssystem in Wirkverbindung mit einer die Streckentrennerpositionen enthaltenden elektronischer Karte oder durch Fahrzeugkommunikation mit einer die Streckentrennerpositionen übertragenden Leitzentrale oder auf streckenseitige Einrichtungen basieren.

Erfindungsgemäß ist die Antriebssteuerung dazu ausgebildet, bei Überfahrt des Streckentrenners in einer Beschleunigungs- oder Beharrungsphase des Triebfahrzeugs die Energieeinspeisung zur Energieversorgung des Antriebs über den Stromabnehmer zu vermindern oder abzuschalten. Zieht der Antrieb des Triebfahrzeuge bei Erkennung einer bevorstehenden Streckentrennerüberfahrt gerade Traktionsstrom über den Stromabnehmer, so erfolgt durch die Antriebssteuerung automatisch eine Abregelung des dem motorisch betriebenen Antrieb zugeführten Antriebsstroms.

Vorzugsweise ist die Antriebssteuerung des erfindungsgemäßen Betriebssystems dazu ausgebildet, dem Antrieb bei verminderter oder abgestellter Energieeinspeisung über den Stromabnehmer Traktionsenergie aus einem fahrzeugseitigen Energiespeicher zuzuführen. Abhängig von der Antriebskonzeption kann eine mit einer temporären Unterbrechung der Energieeinspeisung aus der Fahrleitung einhergehende Traktionsunterbrechung bei Überfahrt von in Anfahrbereichen angeordneten Streckentrennern durch Energieentnahme aus einem fahrzeugseitigen Energiespeicher oder aus Eingangsfiltern der fahrzeugseitigen Stromrichter reduziert oder gar vermieden werden.

Erfindungsgemäß ist die Antriebssteuerung dazu ausgebildet, bei Überfahrt des Streckentrenners in einer Bremsphase des Triebfahrzeugs eine Rückspeisung von im generatorisch betriebenen Antrieb erzeugter Bremsenergie über den Stromabnehmer zu unterbinden und einem fahrzeugseitigen Bremswiderstand zuzuführen. Mit Vorteil können Streckentrenner in Bremsbereichen der Fahrstrecke, zum Beispiel im Bereich von Kreuzungen oder Haltestelleneinfahrten, angeordnet und auch von rückspeisefähigen Triebfahrzeugen befahren werden. Für die kurze Zeit der Streckentrennerüberfahrt wird die Rückspeisung von Bremsenergie unterbrochen, was jedoch den Rückspeisegrad der Gesamtanlage nur unwesentlich verschlechtert. Wenn gerade in Bremsbereichen die Rückspeisung in die Fahrleitungsanlage unterbrochen wird, werden gleichzeitig die Potentialdifferenzen bei fehlender Längskupplung der Speiseabschnitte reduziert, da der Stromabnehmer Energiequelle ist und das Potential bei Rückspeisung am Stromabnehmer angehoben wird. Damit reduzieren sich - unabhängig vom Einsatz leitfähiger Schleifkufen am Streckentrenner - die Ausgleichsströme bei Überfahrt des Stromabnehmers.

In einer vorteilhaften Ausgestaltung des erfindungsgemäßen Betriebssystems ist die Antriebssteuerung dazu ausgebildet, nach einer einstellbaren Zeitdauer oder Wegstrecke die Energieübertragung über den Stromabnehmer automatisch wieder zu erhöhen oder zuzuschalten. Hat das Triebfahrzeug den Streckentrenner passiert, so wird nach Zurücklegen einer einstellbaren Wegstrecke die Verminderung oder Abschaltung der Energieübertragung über den Stromabnehmer automatisch wieder aufgehoben. Alternativ kann die Energieübertragung auch nach Verstreichen einer einstellbaren Zeitdauer, gegebenenfalls in Abhängigkeit der Fahrgeschwindigkeit, wieder aufgenommen werden.

In einer bevorzugten Ausgestaltung des erfindungsgemäßen Betriebssystems ist die Einrichtung auch dazu ausgebildet, eine vom Triebfahrzeug absolvierte Überfahrt des Streckentrenners zu erkennen, und wirkt derart mit der Antriebssteuerung zusammen, dass die Energieübertragung über den Stromabnehmer nach absolvierter Überfahrt des Streckentrenners automatisch wieder erhöht bzw. zugeschaltet wird. Der Vorteil dieser Ausgestaltung ist, dass die Erkennungseinrichtung sowohl eine erste Meldung bei bevorstehender Überfahrt als auch eine zweite Meldung nach absolvierter Überfahrt des Streckentrenners an die Antriebssteuerung gibt, so dass diese automatisch auf die Energieübertragung über den Stromabnehmer des Triebfahrzeugs einwirken kann.

In einer weiteren vorteilhaften Ausführungsform des erfindungsgemäßen Betriebssystems weist die Erkennungseinrichtung eine erste streckenseitige Kommunikationseinheit, die zur Aussendung eines Erkennungssignals in einem Nahbereich ausgebildet ist, und eine fahrzeugseitige Kommunikationseinheit, die zum Empfang des Erkennungssignals bei Eintritt in den Nahbereich der streckenseitigen Kommunikationseinheit ausgebildet ist, auf. Die Kommunikationseinheiten können als an sich bekanntes RFID-System ausgeführt sein, wobei RFID für "Radio-Frequeny Identification", zu Deutsch "Identifikation mittels elektromagnetischer Wellen", steht. Die streckenseitige Kommunikationseinheit wird durch einen energieautarken Transponder gebildet, dere von kleiner Baugröße ist, keine Energieversorgung benötigt und direkt auf das Potential der Fahrleitung angeordnet werden kann. Zudem handelt es sich um eine äußerst preisgünstige Industrielösung. Die fahrzeugseitige Kommunikationseinheit wird durch ein Lesegerät für den Transponder gebildet, das beispielsweise auf dem Dach des Triebfahrzeugs angeordnet werden kann. Das Lesegerät umfasst eine Antenne mit projektierbarer Reichweite, die den Nahbereich des RFID-Systems definiert. Dieser ist so groß bemessen, dass auch bei den größtmöglichen bei Passage des Triebfahrzeugs auftretenden Abständen zwischen den Kommunikationseinheiten stets eine sichere Übertragung des Erkennungssignals gewährleistet ist.

Vorzugsweise weist die Erkennungseinrichtung des erfindungsgemäßen Betriebssystems eine zweite streckenseitige Kommunikationseinheit auf, die zur Aussendung eines Erkennungssignals in einem Nahbereich ausgebildet ist, wobei die erste und die zweite streckenseitige Kommunikationseinheit längs der Fahrstrecke auf unterschiedlichen Seiten des Streckentrenners angeordnet sind. Mit Vorteil können hierdurch Fahrstrecken - beispielsweise bei Bauarbeiten - auch in Gegenrichtung befahren werden, da die in Fahrtrichtung dem Streckentrenner vorgelagerte Kommunikationseinheit eine bevorstehende Überfahrt meldet, während die in Fahrtrichtung dem Streckentrenner nachgelagerte Kommunikationseinheit eine absolvierte Überfahrt meldet.

In einer weiteren bevorzugten Ausführungsform des erfindungsgemäßen Betriebssystems sind ein in Fahrtrichtung führendes Triebfahrzeug mit einem ersten Stromabnehmer und ein diesem nachlaufendes Triebfahrzeug mit einem zweiten Stromabnehmer zu deren Betrieb in Doppeltraktion gekoppelt, wobei die Antriebssteuerung dazu ausgebildet ist, die Energieübertragung über den jeweils den Streckentrenner überfahrenden Stromabnehmer zu vermindern oder abzuschalten und die Traktionsenergie über den jeweils anderen Stromabnehmer einzuspeisen. Bei Befahrung der Fahrstrecke mit Triebfahrzeugen in Doppeltraktion kann in Verbindung mit der erfindungsgemäßen Erkennungseinrichtung eine Leistungsverteilung zwischen den Triebfahrzeugen vorgenommen werden. Nähert sich das führende Triebfahrzeug dem Streckentrenner, so wird dessen Leistungsaufnahme begrenzt, während das nachlaufende Triebfahrzeug die Aufbringung der Zugkraft für den Fahrzeugverbund übernimmt. Die Beschleunigung wird dadurch zwar begrenzt, jedoch erfolgt keine komplette Zugkraftunterbrechung wie bei der Leistungsbegrenzung von Triebfahrzeugen in Einzeltraktion. Nachdem das führende Triebfahrzeug den Streckentrenner passiert hat, wird die Leistung des führenden Triebfahrzeugs wieder erhöht und entsprechend die des nachlaufenden Triebfahrzeugs begrenzt.

In einer anderen vorteilhaften Ausgestaltung des erfindungsgemäßen Betriebssystems ist der Antrieb des Triebfahrzeugs in Drehstromtechnik ausgeführt, wobei der Streckentrenner auf der Fahrstrecke in einem Brems- oder in einem Beschleunigungsbereich des Triebfahrzeugs angeordnet ist. Bei Triebfahrzeugen mit Drehstromantriebstechnik wirkt es sich generell positiv aus, die Trennstellen in den unmittelbaren Nahbereich der Haltestellen zu verlegen. Beschleunigt ein solches Triebfahrzeug, so erhöht sich die Leistung des Triebfahrzeugs bis zur so genannten Übergangsgeschwindigkeit. Bei konstanter Speisespannung steigt der Strom proportional mit der Geschwindigkeit bis zur Übergangsgeschwindigkeit an und bleibt darüber hinaus konstant. Befährt ein solches Triebfahrzeug den Streckentrenner mit Geschwindigkeiten kleiner als die Übergangsgeschwindigkeit, also mit 20 bis 40 km/h, so tritt auch dadurch eine Reduzierung der Strombelastung bei Überfahrten von Streckentrennern auf. Diese Erfahrungen lassen sich auch auf die Positionierung der Streckentrenner in Bremsbereichen übertragen.

Weitere Vorteile und Eigenschaften ergeben sich aus nachfolgender Beschreibung eines Ausführungsbeispiels der Erfindung anhand der Zeichnungen, in deren
- FIG 1: eine Trennstelle mit Streckentrenner gemäß Stand der Technik in einer Ansicht quer zur Fahrtrichtung,
- FIG 2: die Trennstelle nach FIG 1 in einer Ansicht in Fahrtrichtung,
- FIG 3: ein erfindungsgemäßes Betriebssystem in einer Ansicht quer zur Fahrtrichtung des Triebfahrzeugs,
- FIG 4: einen vergrößerten Ausschnitt des fahrleitungsseitigen Teils des Betriebssystems aus FIG 3 schematisch veranschaulicht sind.

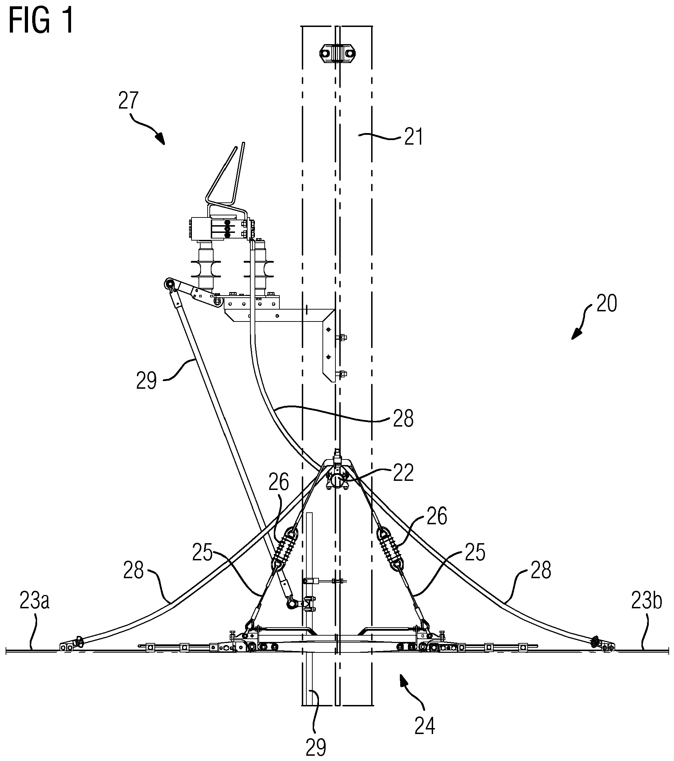

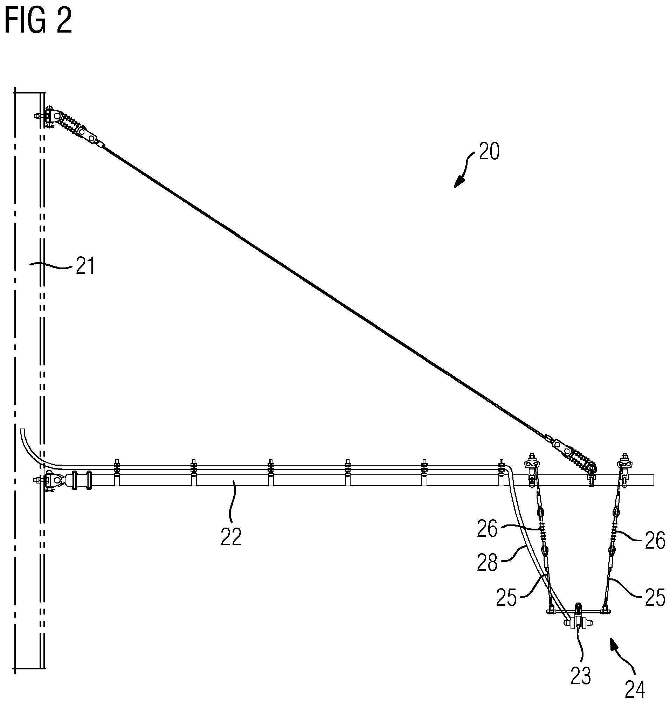

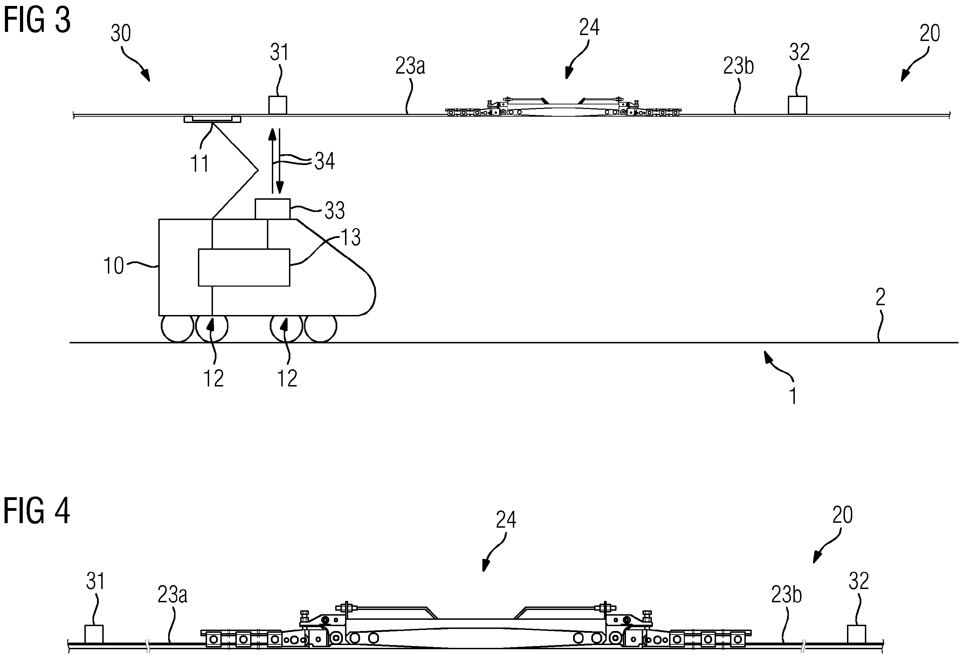

Elektrische Triebfahrzeuge 10 gemäß FIG 3, beispielsweise Nahverkehrsbahnen, werden über eine Fahrleitungsanlage 20 gemäß FIG 1 und FIG 2 mit elektrischer Energie versorgt. Die Fahrleitungsanlage 20 ist als Oberleitungsanlage ausgeführt, die eine von einem Kettenwerk getragene Fahrleitung 23 aufweist. Hierzu sind entlang der Fahrstrecke 2 des Triebfahrzeugs 10 Maste 21 aufgestellt, an welchen seitlich über die Fahrstrecke 2 ragende Ausleger 22 drehbar gelagert sind. Im Bereich des dargestellten Mastes 21 weist die Fahrleitungsanlage 20 eine Trennstelle auf, an der die als Fahrdraht ausgebildete Fahrleitung 23 ist zwei elektrisch voneinander getrennt gespeiste Fahrleitungsabschnitte 23a und 23 b unterteilt ist. Die Fahrleitungsanlage 20 weist an der Trennstelle einen Streckentrenner 24 auf, über den die Fahrleitungsabschnitte 23a und 23b isolierend miteinander verbunden sind. Zur Befahrbarkeit der Trennstelle weist der Streckentrenner 24 Schleifkufen auf, die ein stoßfreies Beschleifen durch den Stromabnehmer 11 ermöglichen. Der Streckentrenner 24 ist an über Schlingenisolatoren 26 verbundenen Aufhängeseilen 25 am Ausleger 22 aufgehangen. Zur Längskupplung der Speiseabschnitte 23a und 23b ist an den Mast 21 ein Trennschalter 27 montiert, der durch einen nicht dargestellten, ein Antriebsgestänge 29 betätigenden Schalterantrieb geöffnet und geschlossen wird. Bei geschlossenem Trennschalter 27 fließt Längsstrom über den Trennschalter 27, der jeweils über Schalterleitungen 28 mit den Fahrleitungsabschnitten 23a und 23b verbunden ist.

Nach FIG 3 und FIG 4 weist ein erfindungsgemäßes System 1 zum Betrieb des elektrischen Triebfahrzeugs 10 eine Erkennungseinrichtung 30 auf, die in festen Abständen vor und hinter dem Streckentrenner 24 streckenseitige Kommunikationseinheiten 31 aufweist. Die streckenseitigen Kommunikationseinheiten 31 sind durch Transponder eines RFID-Systems gebildet, die auf der Fahrleitungsanlage 20 beispielsweise auf Höhe der Fahrleitung 23 angeordnet sind. Die Erkennungseinrichtung 30 weist ferner eine fahrzeugseitige Kommunikationseinheit 33 auf, die beispielsweise auf dem Dach des Triebfahrzeugs 10 angeordnet ist und das Lesegerät des RFID-Systems bildet. Dabei sind die Kommunikationseinheiten 31 bzw. 33 hinsichtlich ihrer gegenseitigen Sende- und Empfangsreichweiten für elektromagnetische Wellen derart konfiguriert, dass bei einer Passage des Triebfahrzeugs 10 eine Kommunikation zwischen den Einheiten 31 bzw. 33 erfolgt: Bei Eintritt der fahrzeugseitigen Kommunikationseinheit 33 in den Nahbereich der streckenseitigen Kommunikationseinheit 31 empfängt letztere ein Abfragesignal und antwortet mit der Aussendung eines Erkennungssignals 34. Auf diese Weise detektiert die Erkennungseinrichtung 30 - je nach Anordnung des Transponders 31 relativ zur Fahrtrichtung des Triebfahrzeugs 10 vor oder hinter dem Streckentrenner 24 - eine bevorstehende oder eine absolvierte Überfahrt des Streckentrenners 24.

Bei dem erfindungsgemäßen Betriebssystem 1 ist die Erkennungseinrichtung 30 nun derart mit der Antriebssteuerung 13 für elektrische Antriebe 12 des Triebfahrzeugs 10 wirkverbunden, dass die Antriebssteuerung 13 nach Empfang eines Meldesignals auf die Energieübertragung zwischen Stromabnehmer 11 des Triebfahrzeugs 10 und der Fahrleitung 23 Einfluss nimmt. Dabei kann die Antriebssteuerung 13 zusätzliche Betriebsparameter des Triebfahrzeugs 10 verarbeiten.

Bei Erkennung einer bevorstehenden Überfahrt des Streckentrenners 24 wird eine Energieübertragung über den Stromabnehmer 11 vermindert oder abgeschaltet, bei Erkennung einer absolvierten Überfahrt wird die Energieübertragung wieder erhöht oder zugeschaltet, und zwar automatisch ohne manuellen Eingriff beispielsweise eines Lokführers. Damit wird der Streckentrenner 24 ohne Energieübertragung über den Stromabnehmer 11 überfahren, wodurch Verschleißfaktoren wie Abrisslichtbögen oder Ausgleichströme ursächlich vermieden werden können.

Befindet sich das Triebfahrzeug 10 bei Überfahrt des Streckentrenners 24 in einer Beschleunigungs- oder Beharrungsphase, so vermindert die Antriebssteuerung 13 die Energieeinspeisung zur Traktionsversorgung des Antriebs 12 über den Stromabnehmer 11. Dabei kann die Antriebssteuerung 13 dem Antrieb 12 Traktionsenergie aus einem nicht dargestellten, fahrzeugseitigen Energiespeicher zuführen. Während einer Bremsphase des Triebfahrzeugs 10 unterbindet die Antriebssteuerung 13 eine Rückspeisung von Bremsenergie über den Stromabnehmer 11 und führt diese stattdessen einem ebenfalls nicht dargestellten, fahrzeugseitigen Bremswiderstand zu.

Überfahren zwei gekoppelte Triebfahrzeuge 10 den Streckentrenner 24 in Doppeltraktion, so kann die Antriebssteuerung 13 die Energieübertragung über die Stromabnehmer 11 des führenden und des nachlaufenden Triebfahrzeugs 10 aufteilen. Während die Energieübertragung über den Stromabnehmer 11 des jeweils den Streckentrenner 24 überfahrenden Triebfahrzeugs 10 vermindert oder abgeschalten wird, wird Traktionsenergie über den Stromabnehmer 11 des jeweils anderen Triebfahrzeugs 10 eingespeist.

Bei Triebfahrzeugen 10, deren Antrieb 12 in Drehstromtechnik ausgeführt ist, können Streckentrenner 24 in vorteilhafter Weise auf der Fahrstrecke in einem Brems- oder in einem Beschleunigungsbereich des Triebfahrzeugs 10 angeordnet sein, beispielsweise im Bereich einer Haltestelle. Bei konstanter Speisespannung steigt der Strom proportional mit der Geschwindigkeit bis zur so genannten Übergangsgeschwindigkeit an und bleibt dann konstant. Dadurch tritt bei Überfahrtgeschwindigkeiten unterhalb der Übergangsgeschwindigkeit eine Reduzierung der Strombelastung und damit des Verschleißes an Streckentrennern 24 auf.

## Patentansprüche

1. System (1) zum Betrieb eines elektrischen Triebfahrzeugs (10), mit einer entlang einer Fahrstrecke (2) des Triebfahrzeugs (10) angeordneten Fahrleitungsanlage (20), wobei ein Stromabnehmer (11) des Triebfahrzeugs (10) zur Energieübertragung mit einer Fahrleitung (23) der Fahrleitungsanlage (20) in Schleifkontakt bringbar ist,
**dadurch gekennzeichnet, dass** die Fahrleitung (23) durch einen vom Stromabnehmer (11) in Schleifkontakt befahrbaren Streckentrenner (24) in elektrisch voneinander getrennt gespeiste Fahrleitungsabschnitte (23a, 23b) geteilt ist
und eine Erkennungseinrichtung (30) umfasst, die dazu ausgebildet ist, eine dem Triebfahrzeug (10) bevorstehende Überfahrt des Streckentrenners (24) zu erkennen, und die derart mit einer Antriebssteuerung (13) für einen elektrischen Antrieb (12) des Triebfahrzeugs (10) zusammenwirkt, dass eine Energieübertragung über den Stromabnehmer (11) während der Überfahrt des Streckentrenners (24) automatisch vermindert oder abgeschaltet ist,wobei die Antriebssteuerung (13) dazu ausgebildet ist, bei Überfahrt des Streckentrenners (24) in einer Beschleunigungs- oder Beharrungsphase des Triebfahrzeugs (10) die Energieeinspeisung zur Energieversorgung des Antriebs (12) über den Stromabnehmer (11) zu vermindern oder abzuschalten und bei Überfahrt des Streckentrenners (24) in einer Bremsphase des Triebfahrzeugs (10) eine Rückspeisung von im generatorisch betriebenen Antrieb (12) erzeugter Bremsenergie über den Stromabnehmer (11) zu unterbinden und einem fahrzeugseitigen Bremswiderstand zuzuführen.

2. Betriebssystem (1) nach Anspruch 1, wobei die Antriebssteuerung (13) dazu ausgebildet ist, dem Antrieb (12) bei verminderter oder abgestellter Energieeinspeisung über den Stromabnehmer (11) Traktionsenergie aus einem fahrzeugseitigen Energiespeicher zuzuführen.

3. Betriebssystem (1) nach Anspruche 1 bis 2, wobei die Antriebssteuerung (13) dazu ausgebildet ist, nach einer einstellbaren Zeitdauer oder Wegstrecke die Energieübertragung über den Stromabnehmer (11) automatisch wieder zu erhöhen oder zuzuschalten.

4. Betriebssystem (1) nach einem der Ansprüche 1 bis 2, wobei die Erkennungseinrichtung (30) auch dazu ausgebildet ist, eine vom Triebfahrzeug (10) abgeschlossene Überfahrt des Streckentrenners (24) zu erkennen, und derart mit der Antriebssteuerung (13) zusammenwirkt, dass die Energieübertragung über den Stromabnehmer (11) nach abgeschlossener Überfahrt des Streckentrenners (24) automatisch wieder erhöht bzw. zugeschaltet wird.

5. Betriebssystem (1) nach einem der Ansprüche 1 bis 3, wobei die Erkennungseinrichtung (30) eine erste streckenseitige Kommunikationseinheit (31), die zur Aussendung eines Erkennungssignals (34) in einem Nahbereich ausgebildet ist, und eine fahrzeugseitige Kommunikationseinheit (33), die zum Empfang des Erkennungssignals (34) bei Eintritt in den Nahbereich der streckenseitigen Kommunikationseinheit (31) ausgebildet ist, aufweist.

6. Betriebssystem (1) nach Anspruch 5, wobei die Erkennungseinrichtung (30) eine zweite streckenseitige Kommunikationseinheit (32) aufweist, die zur Aussendung eines Erkennungssignals (34) in einem Nahbereich ausgebildet ist, wobei die erste und die zweite streckenseitige Kommunikationseinheit (31, 32) längs der Fahrstrecke (2) auf unterschiedlichen Seiten des Streckentrenners (24) angeordnet sind.

7. Betriebssystem (1) nach einem der Ansprüche 1 bis 6, wobei ein in Fahrtrichtung führendes Triebfahrzeug mit einem ersten Stromabnehmer und ein diesem nachlaufendes Triebfahrzeug mit einem zweiten Stromabnehmer zu deren Betrieb in Doppeltraktion gekoppelt sind, und wobei die Antriebssteuerung dazu ausgebildet ist, die Energieübertragung über den jeweils den Streckentrenner (24) überfahrenden Stromabnehmer zu vermindern oder abzuschalten und die Traktionsenergie über den jeweils anderen Stromabnehmer einzuspeisen.

8. Betriebssystem (1) nach einem der Ansprüche 1 bis 7, wobei der Antrieb (12) des Triebfahrzeugs (10) in Drehstromtechnik ausgeführt ist, und wobei der Streckentrenner (24) auf der Fahrstrecke (2) in einem Brems- oder in einem Beschleunigungsbereich des Triebfahrzeugs (10) angeordnet ist.

## Claims

1. System (1) for operating an electric traction vehicle (10), with an overhead line system (20) arranged along a track section (2) of the traction vehicle (10), wherein a current collector (11) of the traction vehicle (10) is able to be brought into sliding contact with an overhead line (23) of the overhead line system (20) in order to transfer energy, **characterised in that**
the overhead line (23) is divided into overhead line sections (23a, 23b), which are energised separately from one another,
by a section isolator (24) on which the current collector (11) is able to travel in sliding contact
and comprises a detection facility (30), which is embodied to detect an imminent crossing of the section isolator (24) by the traction vehicle (10), and which interacts with a drive controller (13) for an electrical drive (12) of the traction vehicle (10) in such a manner that an energy transfer via the current collector (11) is automatically reduced or disabled during the crossing of the section isolator (24), wherein the drive controller (13) is embodied to reduce or disable the energy supply for energising the drive (12) via the current collector (11) while crossing the section isolator (24) in an acceleration or inertia phase of the traction vehicle (10) and, while crossing the section isolator (24) in a braking phase of the traction vehicle (10), to prohibit a feeding back of brake energy generated in the drive (12) operated as a generator via the current collector (11) and to feed it to a vehicle-side brake resistor.

2. Operating system (1) according to claim 1, wherein the drive controller (13) is embodied to feed traction energy from a vehicle-side energy store to the drive (12) while the energisation via the current collector (11) is reduced or suppressed.

3. Operating system (1) according to claims 1 to 2, wherein the drive controller (13) is embodied to automatically re-increase or hook up the energy transfer via the current collector (11) after an adjustable time period or track section.

4. Operating system (1) according to one of claims 1 to 2, wherein the detection facility (30) is also embodied to detect a completed crossing of the section isolator (24) by the traction vehicle (10), and interact with the drive controller (13) in such a manner that the energy transfer via the current collector (11) is automatically re-increased or hooked up after the completed crossing of the section isolator (24).

5. Operating system (1) according to one of claims 1 to 3, wherein the detection facility (30) has a first track-side communication unit (31), which is embodied for transmitting a detection signal (34) at close range, and a vehicle-side communication unit (33), which is embodied for receiving the detection signal (34) upon entering the close range of the track-side communication unit (31).

6. Operating system (1) according to claim 5, wherein the detection facility (30) has a second track-side communication unit (32), which is embodied for transmitting a detection signal (34) at close range, wherein the first and the second track-side communication unit (31, 32) are arranged along the track section (2) on different sides of the section isolator (24) .

7. Operating system (1) according to one of claims 1 to 6, wherein a traction vehicle leading in a direction of travel is coupled to a first current collector and a traction vehicle following said leading traction vehicle is coupled in dual traction for the operation thereof, and wherein the drive controller is embodied to reduce or disable the energy transfer via the current collector crossing the section isolator (24) in each case and to feed traction energy via the other current collector in each case.

8. Operating system (1) according to one of claims 1 to 7, wherein the drive (12) of the traction vehicle (10) is embodied using three-phase current technology, and wherein the section isolator (24) is arranged on the track section (2) in a braking or in an accelerating region of the traction vehicle (10).

## Revendications

1. Système (1) pour faire fonctionner une motrice (10) électrique, comprenant une installation (20) de caténaire, montée le long d'un parcours (2) de la motrice (10), un appareil (11) de prise de courant de la motrice (10) pouvant, pour la transmission d'énergie, être mis en contact frottant avec une caténaire (23) de l'installation (20) de caténaire,
**caractérisé en ce que**
la caténaire (23) est subdivisée par un sectionneur (24) pouvant être parcouru en contact frottant par l'appareil (11) de prise de courant, en des tronçons (23a, 23b) de caténaire, alimentés électriquement séparément les uns des autres,
et comprend un dispositif (30) de détection, qui est constitué pour détecter que la motrice (10) franchit le sectionneur (24) et qui coopère avec une commande (13) d'un entraînement (12) électrique de la motrice (10), de manière à diminuer ou à interrompre automatiquement un transfert d'énergie par l'appareil (11) de prise de courant pendant le franchissement du sectionneur (24), la commande (13) d'entraînement étant constituée pour, lors du franchissement du sectionneur (24), dans une phase d'accélération ou dans un régime de croisière de la motrice (10), diminuer ou interrompre, par l'appareil (11) de prise de courant, l'injection d'énergie pour l'alimentation en énergie de l'entraînement (12) et, lors du franchissement du sectionneur (24), dans une phase de freinage de la motrice (10), arrêter, par l'appareil (11) de prise de courant, une alimentation en retour de l'énergie de freinage, produite par l'entraînement (12) fonctionnant en génératrice, et l'envoyer à une résistance de freinage du côté du véhicule.

2. Système (1) suivant la revendication 1, dans lequel la commande (13) d'entraînement est constituée de manière à envoyer à l'entraînement (12), lorsque l'injection d'énergie est diminuée ou interrompue, par l'intermédiaire de l'appareil (11) de prise de courant, de l'énergie de traction provenant d'un accumulateur d'énergie du côté du véhicule.

3. Système (1) suivant la revendication 1 à 2, dans lequel la commande (13) d'entraînement est constituée pour, après une durée ou un trajet réglable, réaugmenter ou rebrancher automatiquement, par l'appareil (11) de prise de courant, la transmission d'énergie.

4. Système (1) suivant l'une des revendications 1 à 2, dans lequel le dispositif (30) de détection est constitué également pour détecter que la motrice (10) a fini de franchir le sectionneur (24) et pour coopérer avec la commande (13) d'entraînement, de manière à réaugmenter ou à rebrancher automatiquement la transmission d'énergie par l'appareil (11) de prise de courant, après que l'on a fini de franchir le sectionneur (24).

5. Système (1) suivant l'une des revendications 1 à 3, dans lequel le dispositif (30) de détection a une première unité (31) de communication du côté de la voie, constituée pour émettre un signal (34) de détection dans le domaine proche, et une unité (33) de communication du côté du véhicule, constituée pour recevoir le signal (34) de détection à l'entrée dans le domaine proche de l'unité (31) de communication du côté de la voie.

6. Système (1) suivant la revendication 5, dans lequel le dispositif (30) de détection a une deuxième unité (32) de communication du côté de la voie, constituée pour émettre un signal (34) de détection dans le domaine proche, la première et la deuxième unité (31, 32) de communication du côté de la voie étant disposée le long du parcours (2) sur des côtés différents du sectionneur (24).

7. Système (1) suivant l'une des revendications 1 à 6, dans lequel une motrice, conduite dans le sens de la marche et ayant un premier appareil de prise de courant, et une motrice la suivant et ayant un deuxième appareil de prise de courant, sont attelées pour leur fonctionnement en double traction et dans lequel la commande d'entraînement est constituée de manière à diminuer ou à interrompre, par l'appareil de prise de courant franchissant, respectivement, le sectionneur (24), la transmission d'énergie et à injecter l'énergie de traction par l'autre appareil de prise de courant.

8. Système (1) suivant l'une des revendications 1 à 7, dans lequel l'entraînement (12) de la motrice (10) est réalisé suivant la technique du courant triphasé et dans lequel le sectionneur (24) est monté sur le parcours (2) dans une partie de freinage ou d'accélération de la motrice (10).
